# EUROPÄISCHE PATENTSCHRIFT

(11) **EP 2 783 111 B1**
(45) Veröffentlichungstag und Bekanntmachung des Hinweises auf die Patenterteilung: **26.10.2016**
(21) Anmeldenummer: 12797789.0
(22) Anmeldetag: 16.11.2012
(51) Int. Cl.: F03D 13/20, E02D 27/42

(54) **VORRICHTUNG UND VERFAHREN ZUM VERANKERN EINER WINDENERGIEANLAGE**
DEVICE AND METHOD FOR ANCHORING A WIND TURBINE
DISPOSITIF ET PROCÉDÉ POUR ANCRER UNE INSTALLATION ÉOLIENNE

(30) Priorität: 24.11.2011 DE 102011087022
(43) Veröffentlichungstag der Anmeldung: 01.10.2014
(73) Patentinhaber: Wobben Properties GmbH, 26607 Aurich (DE)
(72) Erfinder: SCHACKNIES, Meik, 21698 Harsefeld (DE); GORALSKI, Claus, 82031 Geiselgasteig (DE)
(74) Vertreter: Eisenführ Speiser
(86) Internationale Anmeldenummer: PCT/EP2012/072922
(87) Internationale Veröffentlichungsnummer: WO 2013/076021

(56) Entgegenhaltungen:
- WO-A2-2010/138978
- US-A- 4 926 061
- US-A1- 2007 006 541
- US-A1- 2010 005 742

## Beschreibung

Die vorliegende Erfindung betrifft eine Verankerungssektion zum Verankern eines Turmes einer Windenergieanlage in einem Fundament. Außerdem betrifft die vorliegende Erfindung einen Unterbau eines Turms der Windenergieanlage. Außerdem betrifft die vorliegende Erfindung eine Windenergieanlage und ein Verfahren zum Verankern eines Turmes einer Windenergieanlage.

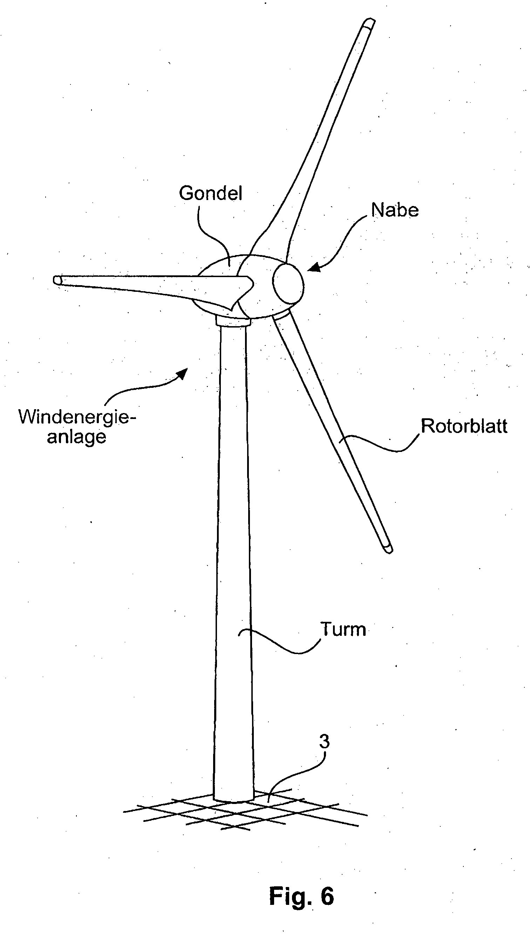

Eine moderne Windenergieanlage weist eine Gondel mit einem aerodynamischen Rotor auf. Die Gondel wird auf einem Turm getragen und der Turm wird in einem Fundament verankert und von diesem getragen. Figur 6 zeigt eine solche Windenergieanlage. Heutzutage können Türme von Windenergieanlagen eine Höhe von über 100 m erreichen. Der Durchmesser des aerodynamischen Rotors kann auch einen Durchmesser von über 100 m erreichen. Türme solcher Windenergieanlagen sind üblicherweise aus Stahl und/oder Spannbeton gefertigt und weisen ein enormes Gewicht auf. Zu dem Gewicht des Turmes kommt das Gewicht der Gondel, die im Falle einer getriebelosen Windenergieanlage einen Generator mit einem Durchmesser von 10 m oder sogar mehr aufweisen kann und ein entsprechendes Gewicht aufweist, das zusätzlich zu dem Eigengewicht des Turms von dem Fundament getragen werden muss. Darüber hinaus lastet im Betrieb der Windenergieanlage ein enormer Winddruck auf dem aerodynamischen Rotor, der letztlich über den Turm in das Fundament geleitet wird und dort zu einem Kippmoment führen kann.

All diese Belastungen muss eine Verankerung des Turms in dem Fundament aufnehmen und in das Fundament einleiten, ohne das Fundament zu beschädigen bzw. so, dass etwaige Beschädigungen so gering wie möglich gehalten werden.

Zur Verankerung eines Stahlturms ist es bekannt, eine Stahlsektion, die auch als Verankerungssektion bezeichnet werden kann, in dem Fundament, also in dem Beton des Fundamentes teilweise einzulassen, um auf dieser Verankerungssektion den Turm zu befestigen. Auf dieser Verankerungssektion wird somit eine unterste Turmsektion eines Turms befestigt.

Eine solche Verankerungssektion kann im Grunde als zu einem Kreis gebogener T-Träger ausgebildet sein, der bezogen auf den Buchstaben T, über Kopf einbetoniert wird. Die Verankerungssektion weist somit bei bestimmungsgemäßer Verankerung an ihrem untersten Ende einen waagerechten, umlaufenden Flanschabschnitt auf (der dem T-Träger seinen Namen gibt) und über den die auftretenden Lasten in das Fundament eingeleitet werden. Ein Teil dieser Verankerungssektion ragt dann über eine Oberfläche des Fundaments, also über eine Betonoberfläche hinaus. Dieser über die Oberfläche hinausragende Abschnitt kann zur Aufnahme von Lasten einen weiteren, umlaufenden Abschnitt, insbesondere Flanschabschnitt, aufweisen, um daran besagte untere Turmsektion zu befestigen.

Problematisch bei dieser Ausführungsform einer Verankerung ist, dass insbesondere der Lasteintrag über den unteren, waagerechten umlaufenden Flansch zu einer Beschädigung des Fundaments führen kann. Bildlich gesprochen besteht die Gefahr, dass die Verankerungssektion einen unterhalb des unteren Flansches liegenden Bereich des Betonfundamentes im ungünstigsten Fall trichterförmig wegdrückt, oder dass zumindest entsprechende Bruchstellen, Bruchbereiche oder Rissbereiche im Fundament auftreten. Hierbei ist besonders problematisch, dass solche Beschädigungen im unteren Bereich des Fundamentes auftreten und daher schwer erkannt werden können. Zudem besteht bereits im Falle einer Rissbildung das Problem, dass Wasser in den Riss und damit in das Fundament eindringen und die Beschädigung des Fundaments verstärken kann.

In gleicher Weise kann eine durch eine Kippkraft auftretende Zugbelastung zu einer ähnlichen lokalen Belastung im oberen Bereich des Fundaments führen, weil auch hierbei der untere waagerechte Flansch zu einem konzentrierten Lasteintrag führen kann. Problematisch ist auch, dass Bewegungen sich auf einen Bewehrungsstab so übertragen können, dass dieser zu Abplatzungen im Beton an einer Fundamentoberseite führen können.

Das Deutsche Patent- und Markenamt hat in der Prioritätsanmeldung folgenden Stand der Technik recherchiert: DE 20 2010 005 965 U1, WO 2008/087181 A1, DE 102 26 996 A1, WO 2011/029994 A1 und DE 25 44 657 A1.

Das Dokument WO 2010/138978 wird als nächstliegender Stand der Technik angesehen.

Der vorliegenden Erfindung liegt somit die Aufgabe zugrunde, eine Verankerung eines Turms einer Windenergieanlage zu verbessern und möglichst die oben erläuterten Probleme zu vermeiden oder zu verringern. Insbesondere soll eine Lösung vorgeschlagen werden, die zu einer verbesserten Verankerung führt und Schäden im Fundament vermeidet. Zumindest soll eine alternative Lösung vorgeschlagen werden.

Erfindungsgemäß wird eine Verankerungssektion gemäß Anspruch 1 vorgeschlagen. Eine solche Verankerungssektion ist zum Verankern eines Turms einer Windenergieanlage in einem Fundament vorgesehen. Sie umfasst einen Tragabschnitt und einen Fundamentabschnitt. Der Tragabschnitt ist zum Befestigen eines Turmsegments zum Tragen des Turms vorbereitet. Beispielsweise kann er einen umlaufenden Flansch zum Aufsetzen einer Turmsektion und mit Bohrungen zum Durchführen von Befestigungsschrauben aufweisen. Der Tragabschnitt wird bestimmungsgemäß oberhalb des Fundaments angeordnet.

Der Fundamentabschnitt ist zum Einbetonieren im Fundament, also in einer entsprechenden Betonmasse des Fundaments vorgesehen. Hierzu weist der Fundamentabschnitt wenigstens einen Stegabschnitt auf, der zumindest teilweise in dem Fundament einbetoniert wird. Der Stegabschnitt ist mit Durchgangsöffnungen versehen, durch die Bewehrungsstäbe oder ähnliche Elemente einer Bewehrung des Fundamentes durchgeführt werden können. Diese Durchgangsöffnungen können bspw. kreisrund ausgestaltet sein und sind dazu vorgesehen, beim Einbetonieren zumindest teilweise Beton aufzunehmen und können dadurch vertikale Kräfte in das Fundament ableiten. Das kann durch in den Öffnungen angeordnete Bewehrungsstäbe verstärkt werden. Es sind dabei mehrere, in unterschiedlicher Höhe angeordnete Durchgangsbohrungen angeordnet, um einen signifikanten und möglichst stark verteilten Lasteintrag zu erreichen. Insbesondere sind viele, möglichst gleichmäßig verteilte Durchgangsbohrungen vorgesehen, um möglichst viel Last hierüber einzutragen.

Vorzugsweise sind die Durchgangsöffnungen in mehreren, nämlich wenigstens 2, 3, 4 oder mehr als 4, insbesondere waagerechten, Reihen angeordnet. Hierdurch soll eine gleichmäßige Verteilung vieler Durchgangsöffnungen erreicht werden und dadurch ein möglichst gleichmäßiger Lasteintrag.

Der Lastabtrag kann hierdurch recht gleichmäßig verteilt werden, wodurch lokale Belastungsmaxima, insbesondere direkt unterhalb der Verankerungssektion, nämlich unterhalb des Fundamentabschnitts der Verankerungssektion vermieden werden. Hierdurch soll Beschädigungen durch lokale Belastungsmaxima vorgebeugt werden. In dem Stegabschnitt sind somit in unterschiedlichen Höhen, also unterschiedlichen vertikalen Positionen in dem Stegabschnitt Durchgangsöffnungen angeordnet. Vorzugsweise wird durch jede dieser Durchgangsöffnungen ein Bewehrungsstab geführt und entsprechend kann auch der Lastabtrag von dem Stegabschnitt in die Bewehrung in unterschiedlichen Ebenen des Fundaments erfolgen. Grundsätzlich ist eine gleichmäßige Verteilung der Durchgangsöffnungen in der jeweiligen Öffnungsreihen vorzuziehen, um auch einen möglichst gleichmäßigen Lastabtrag zu gewährleisten. Gleichwohl können grundsätzlich auch andere Verteilungen in Betracht kommen.

Gemäß einer Ausführungsform wird vorgeschlagen, in den Öffnungsreihen jeweils unterschiedlich viele Öffnungen vorzusehen, um einen gleichmäßigeren, insbesondere steifigkeitsabhängigen Lastabtrag zu erreichen.

Vorzugsweise ist der Stegabschnitt als Zylindermantel ausgebildet. Dies entspräche einem senkrechten Stegabschnitt, der kreisförmig umläuft. Grundsätzlich kann bei einer solchen oder anderen Form auch nur ein Segment eines Zylindermantel vorgesehen sein, um beispielsweise mehrere Segmente zu einem vollständig umlaufenden Zylindermantel zusammenzusetzen.

Diese senkrechte Ausgestaltung des Stegabschnitts, also die Ausgestaltung eines Zylindermantels ist besonders vorteilhaft zur Verwendung zusammen mit waagerecht verlaufenden Bewehrungsstäben, die entsprechend quer zum Steg verlaufen können und quer durch den Stegabschnitt jeweils im Bereich einer Durchgangsöffnung geführt werden können. Hierdurch ergibt sich ein vorteilhafter Lastabtrag aus dem Turm über die Verankerungssektion in die Bewehrung des Fundaments.

Der Stegabschnitt kann - bezogen auf eine senkrechte Schnittansicht - quer zur Umlaufrichtung des Stegabschnitts leicht schräg gestellt sein, was zu einer Form eines Kegelstumpfmantels führt. Die Verwendung einer somit kreisrunden Form - in einer Draufsicht auf die Verankerungssektion - ist die bevorzugte Ausführungsform. Diese kreisrunde Form ist insoweit im Wesentlichen durch die Form des aufzusetzenden unteren Turmsegments bedingt.

Günstig ist es, wenn der Tragabschnitt als Flansch ausgebildet ist. Hierdurch kann ein unteres Turmsegment auf einem solchen Trag- oder Flanschabschnitt - gegebenenfalls unter Verwendung eines Ausgleichsmittels - aufgesetzt und daran befestigt werden. Insofern ist der Tragabschnitt vorteilhafterweise als Flansch im Sinne eines Befestigungsflansches ausgebildet.

Günstig ist es zudem, wenn an dem Stegabschnitt ein Verankerungsabschnitt oder dergleichen, der auch als Flansch ausgebildet wäre an einer dem Tragabschnitt abgewandten Seite vermieden wird. Ein Lastabtrag erfolgt dann ausschließlich oder im Wesentlichen über die Durchgangsbohrungen, ggf. unterstützt durch sie hindurch geführte Bewehrung. Eine Bündelung des Lasteintrags über andere Verankerungsabschnitte wird vermieden.

Insbesondere ein Verankerungsabschnitt einer herkömmlichen Verankerungssektion, und die damit verbundenen Gefahren einer Fundamentbeschädigung können vermieden werden.

Günstig ist es, die Verankerungssektion als Stahlsektion vorzusehen. Diese ist somit an die Verbindung mit einer unteren Turmsektion aus Stahl - mit oder ohne Ausgleich - mit angepasst.

Eine weitere bevorzugte Ausführungsform schlägt vor, dass die Durchgangsöffnungen jeweils im Wesentlichen oval und/oder elliptisch ausgebildet sind und bestimmungsgemäß eine vertikale Ausrichtung aufweisen. Bei bestimmungsgemäßer Verankerung weisen die Durchgangsöffnungen somit in vertikaler Richtung eine größere Ausdehnung auf als in waagerechter Richtung. Dies kann durch eine im Wesentlichen elliptische oder ovale Form erfolgen. Grundsätzlich kommen auch rechteckige oder vieleckige Formen in Betracht.

Günstig ist es, - für diese oder andere Formen der Durchgangsöffnung - wenn die Dimensionierung der Durchgangsöffnungen für den vorgesehenen Anwendungsfall so vorgenommen wird, dass jeweils ein Bewehrungsstab so durch eine Durchgangsöffnung geführt werden kann, dass der Bewehrungsstab diese Öffnung nicht berührt. Es besteht somit kein unmittelbarer Kontakt zwischen Bewehrungsstab und Verankerungssektion. Der Lastabtrag erfolgt von der Verankerungssektion über ein Material, das zwischen dem jeweiligen Bewehrungsstab und dem Stegabschnitt in der Durchgangsöffnung angeordnet ist. Dies kann beispielsweise auch eine Vergussmasse wie die Betonmasse des Fundaments sein. Der Lastabtrag erfolgt also von dem Stegabschnitt über dieses den Bewehrungsstab umgebende Material auf den Bewehrungsstab und von dort weiter in das Fundament oder direkt vom Stegabschnitt über die Durchgangsöffnungen in das Fundament. Durch die im Wesentlichen elliptische oder ovale Form der Durchgangsöffnung ergibt sich ein größerer Abstand zwischen Bewehrungsstab und Öffnung bzw. Berandung der Öffnung in vertikaler Richtung. In diesem Bereich ist entsprechend auch mehr zwischengeordnetes Material, das die Lastübertragung somit in vertikaler Richtung begünstigen soll.

Bevorzugt weist die Durchgangsöffnung einen mittleren Durchmesser von mehr als 80mm, vorzugsweise mehr als 100mm und insbesondere mehr als 110mm auf. Durch diese Größe wird gewährleistet, dass eine Bewehrung bzw. ein Bewehrungsstab gut durch die Durchgangsöffnung geführt werden kann und noch Platz für die Betonmasse bleibt. Hierzu wird von einem Bewehrungsstahl ausgegangen, der einen Durchmesser von etwa 25 mm, ggf. weniger aufweist. Es bleibt dann genug Platz für Beton mit enthaltenem Kies mit einer Korngröße von maximal 32mm mittlerem Durchmesser, insbesondere für Korngrößen von etwa 32 mm mittlerem Durchmesser, der vorzugsweise zur Verwendung vorgeschlagen wird.

Ovale oder elliptische Durchgangsbohrungen haben einen kleinen und einen großen Durchmesser, wobei der kleine Durchmesser im Bereich von 50-90 mm, insbesondere 60-80 mm liegt, und der große Durchmesser im Bereich von 90-130mm, insbesondere von 100 - 110 mm liegt. Hierdurch kann ein günstiger Lasteintrag mittels der Durchgangsbohrungen erreicht werden.

Vorzugsweise sind die Durchgangsbohrungen mit einem elastischen und/oder nachgiebigen Material, insbesondere einem künstlichen Schaumstoff ausgekleidet. Hierdurch kann am Rand der Durchgangsbohrungen eine Nachgiebigkeit erreicht werden, die dort das Auftreten lokaler Belastungsmaxima verhindern.

Weiterhin wird ein Unterbau einer Windenergieanlage zum Verankern eines Turms der Windenergieanlage vorgeschlagen, der ein Betonfundament mit einer erfindungsgemäßen Verankerungssektion vorschlägt. Ein solcher Unterbau weist somit im Wesentlichen das Stahlbetonfundament mit StahlBewehrung auf und eine Verankerungssektion. Stäbe der Bewehrung dieses Stahlbetons sind - zumindest teilweise - durch Durchgangsöffnungen der Verankerungssektion durchgeführt, um dadurch eine Lastübertragung von der Verankerungssektion über die Bewehrung in das Fundament zu erreichen oder zumindest zu verbessern. Ein solcher Unterbau aus Fundament und Verankerungssektion verspricht daher stabil und dauerhaft zu sein und eine möglichst gleichmäßige Lastübertragung zu gewährleisten, um entsprechend einen stabilen Unterbau für einen Turm einer Windenergieanlage zu bilden.

Vorzugsweise ist der Unterbau so ausgestaltet, dass der Tragabschnitt, insbesondere ein umlaufender waagerechter Befestigungsflansch, zum Betonfundament beabstandet ist. Nachdem der Beton eines Betonfundaments abgebunden, also ausgehärtet ist, ergibt sich eine feste Oberfläche des Betonfundamentes, die im Wesentlichen aus Beton besteht. Zu dieser Oberfläche weist der Tragabschnitt somit einen Abstand auf. Dies begünstigt insbesondere die Befestigung einer unteren Turmsektion auf der Verankerungssektion.

Der Unterbau gemäß einer weiteren Ausführungsform ist dadurch gekennzeichnet, dass durch die Durchgangsöffnungen reichende Abschnitte der Bewehrung, insbesondere Bewehrungsstäbe, in der Durchgangsöffnung von einem Füllmaterial, insbesondere Beton umgeben sind, so dass eine Berührung dieser Abschnitte mit den Durchgangsöffnungen vermieden wird.

Durch das Füllmaterial wird ein direkter Kontakt zwischen Bewehrungsstäben und dem Verankerungsabschnitt vermieden. Hierdurch werden lokale Belastungsmaxima vermieden, die auftreten könnten, wenn eine direkte Verbindung und damit direkte Kraftübertragung des Fundamentabschnitts der Verankerungssektion auf einen Bewehrungsstab erfolgen würde. Im Übrigen kann es auch aus galvanischen Gründen, also zur Vermeidung einer galvanischen Verbindung zwischen Verankerungssektion und Bewehrung vorteilhaft sein, diesen direkten Kontakt zu vermeiden. Ein Lastübertrag erfolgt dann indirekt von der Verankerungssektion über das Füllmaterial auf den jeweiligen Bewehrungsstab.

Die Vermeidung einer Berührung der Bewehrungsstäbe mit der Durchgangsöffnung ist so zu verstehen, dass die Bewehrungsstäbe nicht eine Berandung der Durchgangsöffnungen berühren und damit die Bewehrungsstäbe überhaupt nicht die Verankerungssektion berühren.

Um unterhalb der Verankerungssektion einen Lastabtrag in das Betonfundament zu verhindern, wird vorzugsweise unterhalb der Verankerungssektion ein kompressibles, insbesondere elastisches Material angeordnet. Beispielsweise wird vorgeschlagen, als kompressibles Material ein Schaumstoffmaterial und/oder Kunststoffmaterial anzuordnen, um nur zwei Beispiele zu nennen.

Zudem wird eine Windenergieanlage mit einem Turm vorgeschlagen, bei der der Turm mittels einer Verankerungssektion gemäß der Erfindung und auf einem Unterbau wie oben beschrieben verankert ist. Eine solche Windenergieanlage weist also ein Fundament auf, in dem eine Verankerungssektion verankert ist, auf der der Turm der Windenergieanlage befestigt ist.

Weiterhin wird ein Verfahren zum Verankern eines Turmes einer Windenergieanlage vorgeschlagen. Dieses Verfahren umfasst zumindest die Schritte Vorbereiten einer Bewehrung eines Betonfundaments einer Windenergieanlage, zusammen mit einer Verankerungssektion zum Verankern des Turms in dem Betonfundament, wobei Abschnitte der Bewehrung, insbesondere Bewehrungsstäbe, durch Durchgangsöffnungen in einem Stegabschnitt der Verankerungssektion in unterschiedlichen, Höhen geführt werden, und Gießen und Aushärten des Betonfundaments um die Verankerungssektion in dem Betonfundament zu verankern.

Somit wird zunächst eine Bewehrung eines Betonfundaments einer Windenergieanlage zusammen mit einer Verankerungssektion vorbereitet. Es wird also in einer Baugrube, in der später das Fundament sitzen soll, ein Geflecht der Bewehrung vorbereitet. Außerdem wird die Verankerungssektion positioniert. Die Verankerungssektion weist Durchgangsöffnungen auf und die Bewehrung wird zusammen mit der Verankerungssektion so vorbereitet, dass Bewehrungsstäbe der Bewehrung durch die Durchgangsöffnungen der Verankerungssektion hindurch reichen.

Im nächsten Schritt wird die Betonmasse in eine, in der Baugrube angeordnete Schalung eingegossen und umschließt die Bewehrung vollständig und die Verankerungssektion teilweise, nämlich im Bereich Ihres Fundamentabschnitts und damit auch im Bereich der Durchgangsöffnungen. Schließlich muss die Betonmasse aushärten.

Günstig ist es, die Abschnitte der Bewehrung so durch die Durchgangsöffnungen zu führen, dass sie die Durchgangsöffnungen nicht berühren und beim Gießen von Füllmaterial umgeben werden.

Nachfolgend wird die Erfindung anhand von Ausführungsbeispielen unter Bezugnahme auf die begleitenden Figuren exemplarisch erläutert.
- Figur 1: zeigt eine Verankerungssektion in einer Schnittansicht zur Erläuterung des Standes der Technik.
- Figur 2: zeigt eine weitere Verankerungssektion in einer Schnittansicht zur Erläuterung des Standes der Technik.
- Figur 3: zeigt einen Ausschnitt einer Verankerungssektion gemäß einer Ausführung der Erfindung in einer perspektivischen Darstellung.
- Figur 4: zeigt die Durchführung eines Bewehrungsstabs durch eine Durchgangsöffnung in einer seitlichen Schnittansicht.
- Figur 5: zeigt eine Durchgangsöffnung gemäß Figur 4 schematisch und aus einer anderen Perspektive.
- Figur 6: zeigt eine Windenergieanlage in einer Gesamtansicht.

Die Erläuterung der Erfindung anhand der nachfolgenden Figuren bedient sich schematischer Darstellungen. Hierin können identische Bezugszeichen für ähnliche, nicht identische Elemente oder ähnlich, nicht identisch dargestellte Elemente verwendet werden.

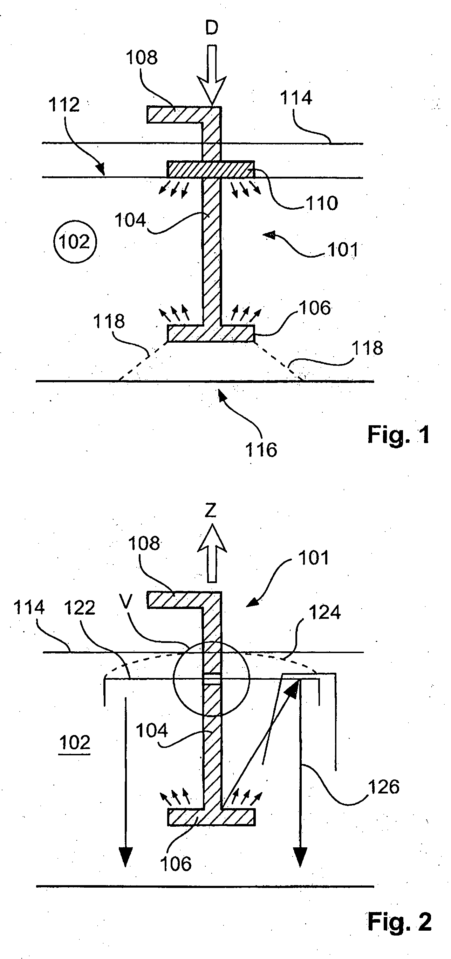

Figur 1 zeigt eine im Grunde bekannte Verankerungssektion 101 in einer seitlichen Schnittansicht und die Verankerungssektion 101 ist zum Teil in ein Betonfundament 102 eingelassen. Das Betonfundament 102 ist aus Gründen der Übersichtlichkeit halber nicht schraffiert dargestellt. Die Verankerungssektion weist einen größtenteils einbetonierten Stegabschnitt 104 auf, der an seiner Unterseite einen etwa waagerecht ausgebildeten Flanschabschnitt 106 als Verankerungsabschnitt aufweist. An einer oberen Seite ist ein Befestigungsflansch 108 vorgesehen, an dem eine untere Turmsektion befestigt werden kann. Die Verankerungssektion 101 weist zudem einen weiteren Stützflansch 110 auf, der sich auf einer exemplarisch dargestellten Ebene 112 abstützen kann, um Druckkräfte in das Fundament 102 einzuleiten. Der Stützflansch 110 kann - wie dargestellt - ebenfalls in das Betonfundament 102 eingegossen sein und weist von seiner Oberkante noch einen Abstand von beispielsweise 20 cm bis zu einer Oberkante 114 des Betons, also Betonfundaments, auf. Alternativ liegt der Stützflansch 110 direkt auf einer Betonoberseite auf, so dass die gezeigte Ebene 112 dann die Oberkante des Betons anzeigt und die Oberkante 114 entfällt.

Lasten auf der Verankerungssektion 101, die im Wesentlichen in vertikaler Richtung wirken, werden hauptsächlich über den Verankerungsabschnitt 106 und den Stützflansch 110 in das Betonfundament 102 eingeleitet. Hierbei kommt es in diesen Bereichen um den Verankerungsabschnitt 106 und den Stützflansch 110 zu lokalen Belastungsmaxima. Beispielsweise kann eine nach unten wirkende Last - der Druck D - auf dem Verankerungsabschnitt 106 von diesem in das Betonfundament 102 so abgeleitet werden, dass von dem Verankerungsabschnitt 106 aus eine Kraft etwa trichterförmig in den unteren Bereich des Betonfundaments 102 ausstrahlt. Entsprechend besteht die Gefahr, dass ein solcher trichterförmiger Abschnitt 116 aus dem Fundament herausbricht oder sich zumindest an seinen Rändern Defekte, Brüche oder Risse bilden können. Solche potentiellen Beschädigungsbereiche 118 sind in der Figur 1 zur Veranschaulichung gestrichelt dargestellt.

Ebenso können Zugbelastungen, die auf die Verankerungssektion 101 wirken, zu ähnlichen lokalen Belastungsmaxima und ähnlichen Schäden führen und Brüche oder Risse oberhalb des Stützflansches hervorrufen.

Eine weitere Verankerungssektion 101 gemäß. Figur 2 weist einen Stegabschnitt 104 mit einem Verankerungsabschnitt 106 und einem Befestigungsflansch 108 auf. Der Stegabschnitt 104 ist teilweise und der Verankerungsabschnitt 106 vollständig in ein Betonfundament 102 eingelassen. Der Befestigungsflansch 108 und ein Teil des Stegabschnitts 104 ragt über die Oberkante 114 des Betonfundament 102 hinaus.

Die Figur 2 zeigt zudem eine Durchgangsöffnung 120, durch die ein Bewehrungsstäb 122 hindurchgeführt ist. Der Bewehrungsstab 122 ist Teil einer Bewehrung des Betonfundaments 102, die in der Figur 2 nicht weiter dargestellt ist.

Der Bewehrungsstab 122 ist dazu vorgesehen, waagerechte Kräfte aufzunehmen. Im Falle einer auf die Verankerungssektion 101 wirkenden Zugbelastung Z kann durch unerwünschte Lasteinleitung ein Teil der entsprechenden Last auf den Bewehrungsstab 122 übertragen, der hier repräsentativ für eine Vielzahl von Bewehrungsstäben steht, die in dieser Schnittansicht nicht dargestellt sind. Eine resultierende Belastung wird über den Bewehrungsstab in das Betonfundament 102 eingeleitet. Der Bewehrungsstab 122 verbiegt sich durch unerwünschten vertikalen Lasteintrag und führt zu Belastungen des Betons. Die gestrichelte Linie 124 veranschaulicht einen so verbogenen Bewehrungsstab in einer übertriebenen Darstellung. Somit können auch hierdurch Beschädigungen des Betons an dessen Oberseite auftreten.

Beim Auftreten einer dargestellten Zugbelastung Z wird außerdem ein Teil der Last von dem Verankerungsabschnitt 106 nach oben in das Betonfundament 102 eingeleitet. Eine solche Einleitung einer Kraft von dem Verankerungsabschnitt 106 aus ist in der Figur 2 durch einen Lastpfad 126 veranschaulicht. Dieser beginnt an einer Oberseite des Verankerungsabschnitts 106 und verläuft von dort aus gestrichelt zur Bewehrung - dem Bewehrungsstab 122 - und von dort zurück in vertikaler Richtung nach unten ins Fundament. Es ergeben sich somit z.T. diagonale Kraftrichtungen, in die z.T. konzentrierte Kräfte wirken, die zu einer ungünstigen Belastungskonzentration führen können.

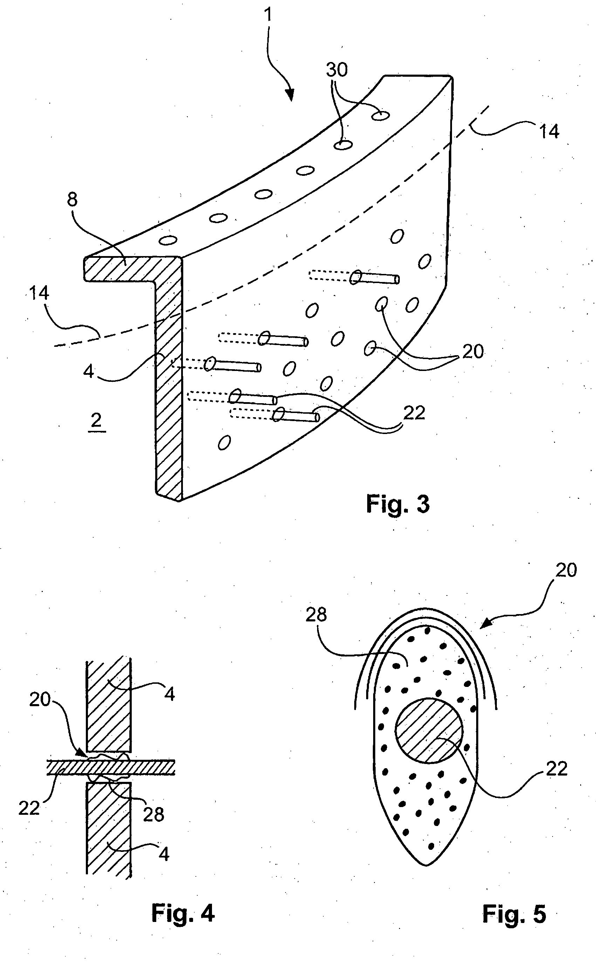

Figur 3 veranschaulicht den grundsätzlichen Aufbau einer Verankerungssektion 1 gemäß einer Ausführungsform. Die Verankerungssektion 1 der Figur 3 weist einen Befestigungsflansch 8 mit einer Vielzahl von Befestigungsöffnungen 30 auf. Ein Stegabschnitt 4 ist im Wesentlichen in einem Betonfundament 2 einbetoniert, dessen Oberkante 14 zur Veranschaulichung angedeutet ist Der einbetonierte Abschnitt des Stegabschnitts 4 weist eine Vielzahl von Durchgangsöffnungen 20 auf, durch die jeweils ein Bewehrungsstab 22 geführt ist. Der Bewehrungsstab 22 kann auch als Durchsteck-Bewehrung bezeichnet werden und besteht aus Betonstahl. In der Figur 3 sind nur in einigen Durchgangsöffnungen 20, die auch als Bohrungen bezeichnet werden können, Bewehrungsstäbe 22 als durchgeführt eingezeichnet. Dies verdeutlicht, dass ein Lasteintrag auch über die Durchgangsöffnungen 20 direkt in den Beton erfolgen kann, ohne dass jeweils ein Bewehrungsstab verwendet werden muss. Ebenso können Ausführungsformen so gestaltet sein, dass durch jede Durchgangsöffnung ein Bewehrungsstab oder ähnliches oder vergleichbares Element einer Bewehrung durchgeführt ist. Die Durchgangsöffnungen 20 gemäß Figur 3 sind in mehreren horizontal verlaufenden Reihen angeordnet, nämlich gemäß der gezeigten Ausführungsform in drei Reihen. Gleichzeitig ist eine im Wesentlichen gleichmäßige Verteilung der Durchgangsöffnungen auch begünstigt durch die reihenweise Anordnung vorgesehen. Hierdurch soll ein möglichst gleichmäßig verteilter Lasteintrag von der Verankerungssektion 1 über die Durchgangsöffnungen und ggf. oder teilweise über die Bewehrungsstäbe 22 in das Fundament 2 ermöglicht werden. Die Vielzahl verteilter Durchgangsöffnungen ermöglicht entsprechend die Verteilung des Lasteintrags, um dadurch die Belastung in dem Fundament zu verteilen und Belastungskonzentrationen, insbesondere daraus resultierende Beschädigungen zu vermeiden.

Figur 4 zeigt eine Vergrößerung einer Durchgangsöffnung 20 mit durchgeführtem Bewehrungsstab 22 schematisch. Diese Vergrößerung veranschaulicht, dass der Bewehrungsstab 22 in der Durchgangsöffnung 20 des Stegabschnitts 4 so positioniert sein soll, dass der Stegabschnitt 4 und damit eine Berandung der Durchgangsöffnung 20 nicht berührt wird. Hierfür ist der Bewehrungsstab 22 in der Durchgangsöffnung 20 mit einem Füllmaterial 28 umgeben. Kräfte, einschließlich Scherkräfte können so von dem Bewehrungsstab 22 von dem Stegabschnitt 4 und damit der Verankerungssektion 1 aufgenommen werden. Dabei wird eine Kraft von dem Stegabschnitt 4 nur mittelbar über das Füllmaterial oder Zwischenmaterial auf den Bewehrungsstab übertragen.

Figur 5 zeigt eine Ausführungsform einer Durchgangsöffnung 20 in einer Detailansicht. Die Durchgangsöffnung 20 weist somit im Wesentlichen eine ovale Form auf, deren Längsrichtung in vertikaler Richtung bei bestimmungsgemäßer Verwendung der Verankerungssektion verläuft. In der Durchgangsöffnung 20 ist im Querschnitt dargestellt ein Bewehrungsstab 22 angeordnet, der mit einem Füllmaterial 28 umgeben ist. Aufgrund der im Wesentlichen ovalen Form der Durchgangsöffnung 20 ist deutlich mehr Füllmaterial oberhalb und unterhalb des Bewehrungsstabs 22 angeordnet als seitlich von ihm. Es ist zu beachten, dass diese schematische Darstellung zur besseren Darstellung die Größenverhältnisse nicht richtig wiedergibt. Insbesondere wäre bei einer maßstabsgerechten Darstellung der Durchmesser des Bewehrungsstabes wesentlich klein als er in Figur 5 dargestellt ist.

Somit wird zur Verbesserung eines Fundaments für einen Windenergieanlagenturm und insbesondere auch zur Kosteneinsparung eine Lösung vorgeschlagen, die insbesondere eine Verankerungssektion zum teilweisen Einbetonieren in einem Stahlbetonfundament betrifft. Die Lösung ermöglicht insbesondere eine effiziente und möglichst gleichmäßige Kraftübertragung von der Verankerungssektion in das Fundament.

Eine Lastübertragung erfolgt somit von dem Stegabschnitt über das Füllmaterial auf den Bewehrungsstab und weiter in das Fundament, und/oder direkt von dem Stegabschnitt im Bereich der Durchgangsöffnungen in das Fundament. Das Füllmaterial, das den Bewehrungsstab somit umgibt und aus Beton gefertigt sein kann, kann somit auch als Betondübel bezeichnet werden.

Um unterhalb der Verankerungssektion 1 einen Lastabtrag in das Betonfundament zu verhindern, wird vorzugsweise unterhalb der Verankerungssektion 1 ein kompressibles, insbesondere elastisches Material 300 angeordnet. Beispielsweise wird vorgeschlagen, als kompressibles Material 300 ein Schaumstoffmaterial und/oder Kunststoffmaterial anzuordnen, um nur zwei Beispiele zu nennen.

## Patentansprüche

1. Verankerungssektion zum Verankern eines Turms einer Windenergieanlage in einem Fundament, umfassend
- einen Tragabschnitt zum Befestigen eines Turmsegments oberhalb des Fundamentes und zum Tragen des Turms und
- einen mit dem Tragabschnitt fest verbundenen Fundamentabschnitt zum Einbetonieren in das Fundament,
und der Fundamentabschnitt weist wenigstens einen Stegabschnitt auf mit mehreren, in unterschiedlichen Höhen angeordneten Durchgangsöffnungen zum Ableiten vertikaler Kräfte in das Fundament und zum Durchführen von Bewehrungsstäben,
**dadurch gekennzeichnet, dass** der Stegabschnitt als Zylindermantel oder als Kegelstumpfmantel mit einer vom Tragabschnitt abgewandten Seite ohne Flansch ausgebildet ist.

2. Verankerungssektion nach Anspruch 1, **dadurch gekennzeichnet, dass** die Durchgangsöffnungen in Reihen als Öffnungsreihen angeordnet sind, und wenigstens zwei Öffnungsreihen vorgesehen sind.

3. Verankerungssektion nach einem der vorstehenden Ansprüche, **dadurch gekennzeichnet, dass** der Tragabschnitt als Flansch ausgebildet ist.

4. Verankerungssektion nach einem der vorstehenden Ansprüche, **dadurch gekennzeichnet, dass** die Verankerungssektion als Stahlsektion ausgebildet ist.

5. Verankerungssektion nach einem der vorstehenden Abschnitte, **dadurch gekennzeichnet, dass** die Durchgangsöffnungen jeweils im Wesentlichen oval und/oder elliptisch mit bestimmungsgemäß vertikaler Ausrichtung ausgebildet sind und/oder einen mittleren Durchmesser von mehr als 80mm, vorzugsweise mehr als 100mm und insbesondere mehr als 110mm aufweisen.

6. Unterbau einer Windenergieanlage zum Verankern eines Turms der Windenergieanlage, umfassend ein Betonfundament mit einer Verankerungssektion nach einem der vorstehenden Ansprüche.

7. Unterbau nach Anspruch 6, **dadurch gekennzeichnet, dass** Abschnitte einer in das Betonfundament eingelassenen Bewehrung, insbesondere Bewehrungsstäbe, durch die Durchgangsöffnungen der Verankerungssektion reichen, um einen Lastübertrag von der Verankerungssektion über die Bewehrungsstäbe in das Betonfundament zu erreichen.

8. Unterbau nach Anspruch 6 oder 7, **dadurch gekennzeichnet, dass** der Tragabschnitt der Verankerungssektion zum Betonfundament beabstandet ist.

9. Unterbau nach einem der Ansprüche 6 bis 8, **dadurch gekennzeichnet, dass** durch die Durchgangsöffnungen reichende Abschnitte der Bewehrung, insbesondere Bewehrungsstäbe, in der Durchgangsöffnung von einem Füllmaterial, insbesondere Beton umgeben sind.

10. Windenergieanlage mit einem Turm, **dadurch gekennzeichnet, dass** der Turm mittels einer Verankerungssektion nach einem der Ansprüche 1 bis 5 auf einem Unterbau nach einem der Ansprüche 6 bis 9 verankert ist.

11. Verfahren zum Verankern eines Turms einer Windenergieanlage, umfassend die Schritte:
- Vorbereiten einer Bewehrung eines Betonfundaments einer Windenergieanlage, zusammen mit einer Verankerungssektion zum Verankern des Turms in dem Betonfundament, wobei Abschnitte der Bewehrung, insbesondere Bewehrungsstäbe, durch Durchgangsöffnungen in einem Stegabschnitt der Verankerungssektion in unterschiedlichen Höhen geführt werden, wobei der Stegabschnitt als Zylindermantel oder als Kegelstumpfmantel mit einer vom Tragabschnitt abgewandten Seite ohne Flansch ausgebildet wird,
- Gießen und Aushärten des Betonfundaments um die Verankerungssektion in dem Betonfundament zu verankern.

12. Verfahren nach Anspruch 11, **dadurch gekennzeichnet, dass** die Abschnitte der Bewehrung so durch die Durchgangsöffnungen geführt werden, dass sie von einem Material umgeben werden, so dass sie die Durchgangsöffnungen nicht berühren.

## Claims

1. An anchoring section for anchoring a pylon of a wind power installation in a foundation including
- a carrier portion for fixing a pylon segment above the foundation and for carrying the pylon, and
- a foundation portion fixedly connected to the carrier portion for concreting into the foundation,
and the foundation portion has at least one web portion with a plurality of through openings arranged at different heights for transmitting vertical forces into the foundation and for passing reinforcing bars therethrough,
**characterized in that** the web portion is in the form of a cylindrical casing or in the form of a frustoconical casing having a side remote from the carrier portion without a flange.

2. An anchoring section according to claim 1 **characterised in that** the through openings are arranged in rows in the form of rows of openings and there are provided at least two rows of openings.

3. An anchoring section according to one of the preceding claims **characterised in that** the carrier portion is in the form of a flange.

4. An anchoring section according to one of the preceding claims **characterised in that** the anchoring section is in the form of a steel section.

5. An anchoring section according to one of the preceding claims **characterised in that** the through openings are each substantially oval and/or elliptical in an appropriately vertical orientation and/or are of a mean diameter of more than 80 mm, preferably more than 100 mm and in particular more than 110 mm.

6. A substructure of a wind power installation for anchoring a pylon of the wind power installation including a concrete foundation with an anchoring section according to one of the preceding claims.

7. A substructure according to claim 6 **characterised in that** portions of a reinforcement let into the concrete foundation, in particular reinforcing bars, extend through the through openings in the anchoring section to provide for a transmission of load from the anchoring section into the concrete foundation by way of the reinforcing bars.

8. A substructure according to claim 6 or claim 7 **characterised in that** the carrier portion of the anchoring section is spaced relative to the concrete foundation.

9. A substructure according to one of claims 6 to 8 **characterised in that** portions, that pass through the through openings, of the reinforcement, in particular reinforcing bars, are surrounded in the through opening by a filling material, in particular concrete.

10. A wind power installation comprising a pylon **characterised in that** the pylon is anchored by means of an anchoring section according to one of claims 1 to 5 on a substructure according to one of claims 6 to 9.

11. A method of anchoring a pylon of a wind power installation, including the steps:
- preparing a reinforcement of a concrete foundation of a wind power installation together with an anchoring section for anchoring the pylon in the concrete foundation, wherein portions of the reinforcement, in particular reinforcing bars, are passed through through openings in a web portion of the anchoring section at different heights, wherein the web portion is in the form of a cylindrical casing or in the form of a frustoconical casing having a side remote from the carrier portion without a flange,
- pouring and hardening the concrete foundation to anchor the anchoring section in the concrete foundation.

12. A method according to claim 11 **characterised in that** the portions of the reinforcement are so passed through the through openings that they are surrounded by a material so that they do not touch the through openings.

## Revendications

1. Section d'ancrage pour ancrer une tour d'une éolienne dans des fondations, comprenant
- un segment de support pour fixer un segment de tour au-dessus des fondations et pour supporter la tour, et
- un segment de fondations relié de manière fixe au segment de support, pour être bétonné dans les fondations,
et le segment de fondations présente au moins un segment d'entretoise présentant plusieurs ouvertures de passage disposées à des hauteurs différentes, pour dévier des forces verticales dans les fondations et pour effectuer des barres d'armature,
**caractérisée en ce que** le segment d'entretoise est réalisé sous la forme d'une enveloppe cylindrique ou sous la forme d'une enveloppe tronconique présentant un côté opposé au segment de support, sans bride.

2. Section d'ancrage selon la revendication 1, **caractérisée en ce que** les ouvertures de passage sont disposées dans des rangées sous la forme de rangées d'ouverture, et **en ce qu'**au moins deux rangées d'ouvertures sont prévues.

3. Section d'ancrage selon l'une quelconque des revendications précédentes, **caractérisée en ce que** le segment de support est réalisé sous la forme d'une bride.

4. Section d'ancrage selon l'une quelconque des revendications précédentes, **caractérisée en ce que** la section d'ancrage est réalisée sous la forme d'une section en acier.

5. Section d'ancrage selon l'une quelconque des revendications précédentes, **caractérisée en ce que** les ouvertures de passage sont réalisées respectivement sensiblement de manière ovale et/ou de manière elliptique avec une orientation verticale conformément à l'usage prévu et/ou **en ce qu'**elles présentent un diamètre moyen supérieur à 80 mm, de préférence supérieur à 100 mm et en particulier supérieur à 110 mm.

6. Sous-structure d'une éolienne pour ancrer une tour de l'éolienne, comprenant des fondations en béton pourvues d'une section d'ancrage selon l'une quelconque des revendications précédentes.

7. Sous-structure selon la revendication 6, **caractérisée en ce que** des segments d'une armature intégrée dans les fondations en béton, en particulier de barres d'armature, parviennent à travers les ouvertures de passage de la section d'ancrage afin d'obtenir un transfert de charges de la section d'ancrage dans les fondations en béton en passant par les barres d'armature.

8. Sous-structure selon la revendication 6 ou 7, **caractérisée en ce que** le segment de support de la section d'ancrage est tenu à distance des fondations en béton.

9. Sous-structure selon l'une quelconque des revendications 6 à 8, **caractérisée en ce que** des segments, parvenant à travers les ouvertures de passage, de l'armature, en particulier des barres d'armature, sont entourés dans l'ouverture de passage d'un matériau de remplissage, en particulier de béton.

10. Eolienne comprenant une tour, **caractérisée en ce que** la tour est ancrée au moyen d'une section d'ancrage selon l'une quelconque des revendications 1 à 5 sur une sous-structure selon l'une quelconque des revendications 6 à 9.

11. Procédé pour ancrer une tour d'une éolienne, comprenant les étapes suivantes consistant à :
- préparer au préalable une armature de fondations en béton d'une éolienne, conjointement avec une section d'ancrage pour ancrer la tour dans les fondations en béton, dans lequel des segments de l'armature, en particulier des barres d'armature, sont guidés à travers des ouvertures de passage dans un segment d'entretoise de la section d'ancrage à des hauteurs différentes, dans lequel le segment d'entretoise est réalisé sous la forme d'une enveloppe cylindrique ou sous la forme d'une enveloppe tronconique avec un côté opposé au segment de support, sans bride ;
- couler et durcir les fondations en béton afin d'ancrer la section d'ancrage dans les fondations en béton.

12. Procédé selon la revendication 11, **caractérisé en ce que** les segments de l'armature sont guidés de telle sorte à travers les ouvertures de passage qu'ils sont entourés d'un matériau de telle sorte qu'ils ne viennent pas en contact avec les ouvertures de passage.
